# EUROPEAN PATENT APPLICATION

(11) **EP 2 530 017 A2**
(43) Date of publication of application: **05.12.2012**
(21) Application number: 12170104.9
(22) Date of filing: 30.05.2012
(51) Int. Cl.: B64D 33/02

(54) **Laminate thermal insulation blanket for aircraft applications and process therefor**

(30) Priority: 31.05.2011 US 201113118867
(71) Applicant: MRA Systems, Inc., Baltimore, MD 21220 (US)
(72) Inventor: Maheshwari, Mahendra, Baltimore, MD Maryland 21220 (US); Fang, Xiaomei, Niskayuna, NY New York 12309 (US)
(74) Representative: Williams, Andrew Richard

(57) **Abstract**

A thermal insulation blanket (60) for an aircraft engine (10), and processes for producing the thermal insulation blanket (60) to have low thermal conductivity and high temperature capability. The thermal insulation blanket (60) has a layered construction that includes an aerogel insulation material (62), a composite layer (64) disposed at a first surface of the aerogel insulation material (62), and a backing layer (66) disposed at an opposite surface of the aerogel insulation material (62) so that the aerogel insulation material (62) is encapsulated between the composite and backing layers (64,66). The composite layer (64) contains a resin matrix material reinforced with a fiber reinforcement material.

## Description

### BACKGROUND OF THE INVENTION

The present invention generally relates to thermal insulation blankets of types used in aircraft engines. More particularly, the invention relates to a construction for a thermal insulation blanket that is suitable for surrounding a core engine of a high bypass gas turbine engine.

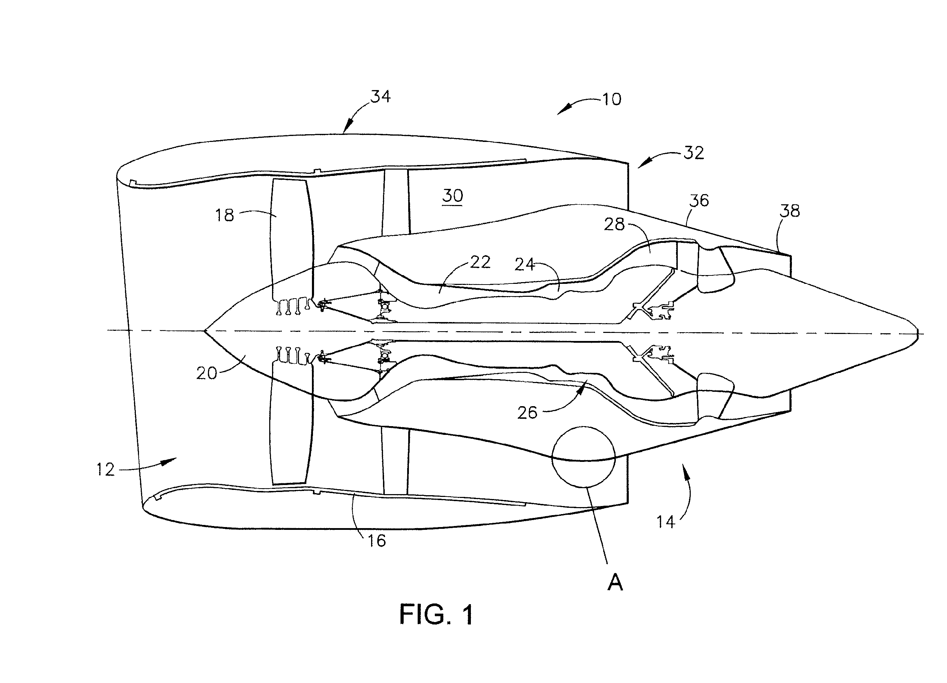

FIG. 1 schematically represents a high-bypass turbofan engine 10 of a type known in the art. The engine 10 is schematically represented as including a fan assembly 12 and a core engine 14. The fan assembly 12 is shown as including a composite fan casing 16 and a spinner nose 20 projecting forwardly from an array of fan blades 18. Both the spinner nose 20 and fan blades 18 are supported by a fan disc (not shown). The core engine 14 is represented as including a high-pressure compressor 22, a combustor 24, a high-pressure turbine 26 and a low-pressure turbine 28. A large portion of the air that enters the fan assembly 12 is bypassed to the rear of the engine 10 to generate additional engine thrust. The bypassed air passes through an annular-shaped bypass duct 30 and exits the duct 30 through a fan nozzle 32. The fan blades 18 are surrounded by a fan nacelle 34 that defines a radially outward boundary of the bypass duct 30. The fan nacelle 34 further defines an inlet duct to the engine 10 and a fan nozzle 32, and typically incorporates an outer translation cowl (not shown) as part of a thrust reverser. The core engine 14 is surrounded by a core cowl 36 that defines the radially inward boundary of the bypass duct 30, and provides an aft core cowl transition surface to the primary exhaust nozzle 38 that extends aftward from the core engine 14.

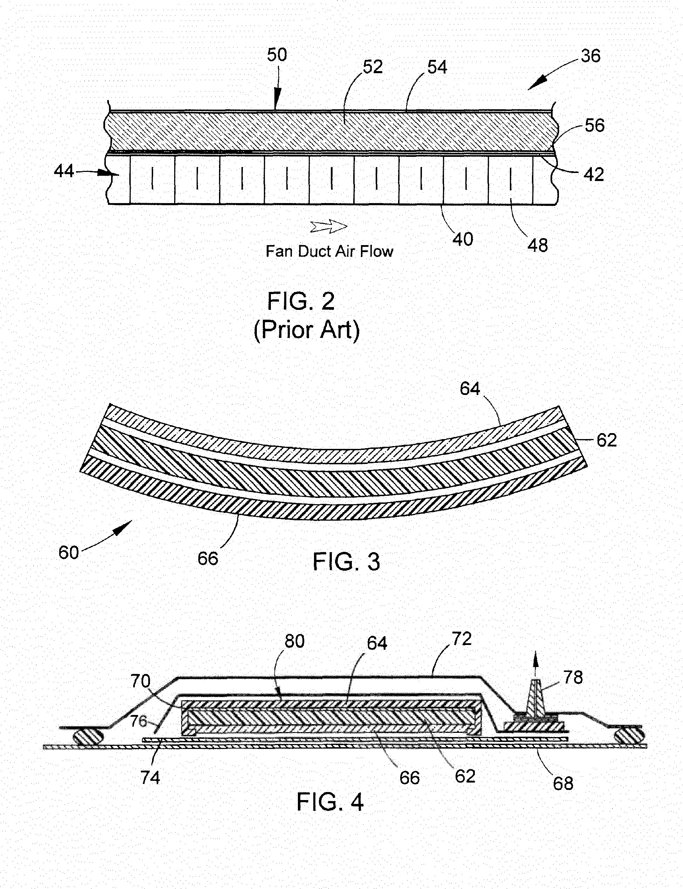

The core cowl 36 provides many functions, including but not limited to the aerodynamic contour for the airflow through the fan bypass duct 30, acoustic suppression, fire containment for the core engine 14, and engine systems failure containment (burst duct). Core cowls of high bypass gas turbine engines have typically been constructed to have an aluminum skin or a fiber-reinforced composite skin adhesively bonded to an aluminum core. An example is schematically represented in FIG. 2, which is indicated to be a detailed cross-sectional view of a region "A" in FIG. 1. The construction of the cowl 36 is represented as comprising a pair of skins 40 and 42 bonded to opposite sides of a relatively thicker core 44. The core 44 is represented as having a honeycomb construction containing continuous hexagonal-shaped cells 48 that pass entirely through the thickness of the core 44, though other lightweight cellular-type constructions are also known and used for cowl cores. Nonlimiting examples of open-cell core materials include open-cell ceramic, metal, carbon and thermoplastic foams and honeycomb-type materials formed of, for example, NOMEX® aramid fibers. Nonlimiting examples of closed-cell core materials include wood and other cellulosic materials, and closed-cell, low-density, rigid foam materials formed of polymethacrylimide and commercially available under the name ROHACELL® from Evonik Industries (formerly Degussa). The construction represented in FIG. 2 is fairly typical of sandwich-type layered structures used in core cowls of high bypass gas turbine engines, as well as other aircraft engine nacelle components, for example, engine inlets, thrust reversers and transcowls. The layered construction of the core cowl 36 enables it to sustain significant structural loading.

As evident from FIGS. 1 and 2, the skin 40 may be referred to as an outer skin of the cowl 36, in that it faces radially outward to define a radially inward boundary of the airflow through the bypass duct 30, whereas the other skin 42 faces radially inward toward the interior of the core engine 14. The outer skin 40 may be formed as an acoustic skin, in which case the skin 40 would be acoustically treated by forming numerous small through-holes that help to suppress noise by channeling pressure waves associated with sound into the cells 48 within the core 44, where the energy of the waves is dissipated through friction (conversion to heat), pressure losses, and cancellation by reflection of the waves from the other skin 42, referred to herein as the backing skin 42. Regardless of whether the core cowl 36 has a metallic or composite construction, a thermal insulation blanket 50 is provided on the backing skin 42. In combination, the cowl 36 and the thermal blanket 50 can be installed to surround at least the combustor section (corresponding to the combustor 24) and turbine section (corresponding to the high and low pressure turbines 26 and 28), and the thermal blanket 50 serves to preserve the structural integrity of the cowl 36 by limiting the temperatures to which the adhesive bonds between the core 44 and skins 40 and 42 of the cowl 36 are subjected during engine operation. Current materials and constructions for the thermal insulation blanket 50 include an insulation material 52, for example, a glass and/or silica fiber matting, between a thin layer of steel 54 and a polymer film 56. The potential for hot air leakage between the insulation blanket 50 and the remainder of the core cowl 36 can create a hazard if bond line temperatures of the cowl 36 are exceeded.

As operating temperatures have increased with newer engine designs, the increasingly severe thermal environments of their core cowls have necessitated thicker and heavier insulation blankets 50, which are disadvantageous in terms of weight (fuel economy), clearance with surrounding components of the core engine 14, and maintenance performed on the core engine 14. As such, there is a desire for thinner thermal insulation blankets that are capable of achieving comparable or lower thermal conductivities, while also reducing weight in order to improve the efficiency of the blanket and the overall efficiency of the engine in which it is installed.

### BRIEF DESCRIPTION OF THE INVENTION

The present invention provides a thermal insulation blanket for aircraft engines, and processes for producing thermal insulation blankets to have low thermal conductivities and high temperature capabilities.

According to a first aspect of the invention, a thermal insulation blanket has a layered construction that includes an aerogel insulation material having oppositely-disposed first and second surfaces, a composite layer disposed at the first surface of the aerogel insulation material, and a backing layer disposed at the second surface of the aerogel insulation material so that the aerogel insulation material is encapsulated between the composite and backing layers. The composite layer contains a resin matrix material reinforced with a fiber reinforcement material.

According to a second aspect of the invention, a thermal insulation blanket is installed on a high-bypass gas turbine engine and surrounds a combustor and/or turbine section of a core engine of the gas turbine engine. The thermal insulation blanket has a layered construction that includes an aerogel insulation material having oppositely-disposed first and second surfaces, a composite layer disposed at the first surface of the aerogel insulation material, and a backing layer disposed at the second surface of the aerogel insulation material so that the aerogel insulation material is encapsulated between the composite and backing layers. The composite layer contains a resin matrix material reinforced with a fiber reinforcement material, and the thermal insulation blanket is installed in the core engine so as to thermally protect a cowl that defines a boundary of a bypass duct of the aircraft engine.

According to another aspect of the invention, a process is provided for fabricating and installing a thermal insulation blanket on an aircraft engine. The process includes stacking a composite layer, an aerogel insulation material, and a backing layer on a tooling to form a stacked structure. The composite layer contains a resin matrix material reinforced with a fiber reinforcement material. The stacked structure is then heated to form a thermal insulation blanket in which the aerogel insulation material is encapsulated between the composite and backing layers. The thermal insulation blanket is then installed on the aircraft engine so that the thermal insulation blanket thermally protects a cowl that defines a boundary of a bypass duct of the aircraft engine.

A beneficial effect is the ability of the thermal insulation blanket to protect nacelle structures, for example, composite core cowls, from engine fires and to maintain composite nacelle structures at temperatures that are not detrimental to the strength structural integrity of the structures. The thermal insulation blanket is capable of performing these roles at lesser thicknesses and/or lower weights than typically possible with prior art blankets, and therefore can result in engine weight reductions, greater clearances with surrounding components, and simpler inspection and maintenance operations performed on a core engine.

Other aspects and advantages of this invention will be better appreciated from the following detailed description.

### BRIEF DESCRIPTION OF THE DRAWINGS

FIG. 1 schematically represents a cross-sectional view of a high-bypass turbofan engine.
FIG. 2 schematically represents a cross-section of a conventional core cowl used in high-bypass gas turbine engines.
FIG. 3 schematically represents a cross-section of a thermal insulation blanket constructed in accordance with an embodiment of this invention.
FIG. 4 schematically represents a cross-section of an apparatus suitable for fabricating the thermal insulation blanket of FIG. 3.

### DETAILED DESCRIPTION OF THE INVENTION

FIG. 3 represents a cross-section of a thermal insulation blanket 60 suitable for use in a high-bypass gas turbine engine, for example, of the type represented in FIG. 1. The thermal blanket 60 represented in FIG. 3 can be installed in place of the thermal insulation blanket 50 of FIG. 2, and therefore can be adapted for use with a core cowl 36. In particular, the thermal blanket 60 can be located on the interior face of the cowl 36 for the purpose of thermally protecting the layered structure (skins 40 and 42 and core 44) of the core cowl 36, similar to the manner represented and described for the prior art blanket 50 of FIG. 2. However, it is foreseeable that the thermal blanket 60 could be installed at other locations of the engine 10, as well as used in applications other than a high-bypass gas turbine engine.

The thermal blanket 60 represented in FIG. 3 has a layered construction that comprises an insulation material 62 bonded to and between a composite layer 64 and a backing layer 66. The insulation material 62 is an aerogel, which as known in the art is a material derived from a gel in which the liquid component of the gel has been replaced with a gas to yield an extremely low-density solid. Preferred compositions for the aerogel insulation material 62 include silicon dioxide (silica; SiO₂) aerogels, though other compositions are foreseeable, for example, alumina (Al₂O₃) aerogels. Commercial examples of suitable silica aerogels are available from Aspen Aerogels, Inc., under the names PYROGEL® XT and PYROGEL® XTF, which are reported to be an amorphous silica that contains a nonwoven glass or silica fiber batting as a reinforcement material. PYROGEL® XT and PYROGEL® XTF are further reported to have a maximum useable temperature of about 650°C, which is compatible with its use as the insulation material 62 of the core engine thermal blanket 60. If formed of PYROGEL® XT or PYROGEL® XTF, the thickness of the aerogel insulation material 62 is at least 0.1 cm, for example, about 0.1 to about 10 cm, and more preferably about 0.5 to about 1 cm. The desired thickness for the aerogel insulation material 62 can be achieved with a single layer of aerogel material or multiple layers of aerogel material that are packaged or bonded together.

As evident from the shape of the blanket 60 in FIG. 3, the composite layer 64 is intended to face radially inward toward the interior of the core engine 14, and therefore serves as at least the initial fire protection barrier for the thermal blanket 60 and cowl 36. The composite layer 64 is preferably a polymer composite material containing a resin matrix material reinforced with a fiber reinforcement material. Preferred compositions for the fiber reinforcement material include glass and/or silica fibers, though the use of other fiber reinforcement materials is foreseeable, for example, quartz, alumina and/or silicon carbide fibers. The fiber reinforcement material is preferably in the form of a fabric, and preferably constitutes at least 10 volume percent of the composite layer 64, more preferably about 40 to about 70 volume percent of the composite layer 64. Suitable compositions for the resin matrix material include, but are not limited to, polysiloxane polymers and geopolymers, for example, polysialate, to which a filler material such as silica may be added. Preferred compositions for the resin matrix material are homogeneous, copolymerized, cross-linked silicone polymers that, when exposed to a flame or a sufficiently high temperature, are converted to inorganic silica. Commercial examples of suitable fabric-reinforced polymer composite materials are available from CYTEC Engineered Materials under the family name SM8000, which are reported to withstand temperatures of about 800°C without burning or charring. Particular examples are SM8027 and SM8030, which contain a silicone polymer as the resin matrix material and silica fabric as the reinforcement material. The silicone polymer matrix material of these composite materials is reported to be converted to silica when subjected to high thermal treatments. The thickness of the composite layer 64 is at least 0.1 mm, for example, about 0.1 to about 5 mm, and more preferably about 0.2 to about 0.5 mm. As with the insulation material 62, the composite layer 64 can be constructed as a single discrete layer or two or more discrete layers to acquire a suitable thickness based on the design requirements of the blanket 60.

The backing layer 66 faces radially outward toward the cowl 36, and can be directly bonded to the radially inward skin 42 of the cowl 36. The backing layer 66 serves as a support film for the blanket 60 that facilitates handling and installation of the blanket 60. Though not directly exposed to the interior of the core engine 14, the backing layer 66 is nonetheless preferably capable of withstanding temperatures of at least 200°C. Suitable compositions for the backing layer 66 include composite materials, aluminum foils and/or one or more polymeric films, for example, polyphenylsulfone (PPSU) films, polyimide films (for example, KAPTON®), polyetherimide films, and/or another high temperature polymeric films that is resistant to fluid exposure. The use of other compositions for the backing layer 66 is foreseeable. An example of a suitable PPSU films is commercially available from Solvay Advance Polymers under the name RADEL®. Preferred composite materials are glass composites and carbon composites that contain aromatic-type epoxy amine resin systems with a service temperature above 120°C, for example, CYCOM® 997 and CYCOM® 977 available from Cytec Engineered Materials, and HEXFLOW® RTM6 and HEXFLOW® VRM37 available from Hexcel. Preferred fiber reinforcements for a composite material include continuous woven, unidirectional, and non-crimp fabrics, which preferably constitute at least 10 volume percent of the backing layer 66, and more preferably about 45 to about 65 volume percent of the backing layer 66. An example of a suitable carbon fiber reinforcement material for the backing layer 66 is commercially available from Hexcel under the name HEXFLOW® AS4. An example of a suitable carbon composite material for the backing layer 66 is commercially available from Cytec Engineered Materials under the name CYCOM®997/AS4 prepreg.

It is also within the scope of the invention to employ the same material used as the composite layer 64, for example, a silica fabric-reinforced polysiloxane composite, as the backing layer 66, in which case the insulation material 62 is effectively encased in the composite layer 64. The thickness of the backing layer 66 is preferably at least 0.02 mm, for example, about 0.02 to about 2 mm, and more preferably about 0.04 to about 0.13 mm.

As noted above, the thermal blanket 60 can further include optional additional layers. For example, FIG. 4 represents a process for fabricating the thermal blanket 60, in which an optional layer 70 formed of an aluminum foil or polyimide film (for example, KAPTON®) is provided between the insulation material 62 and composite layer 64.

The fabrication approach represented in FIG. 4 is one of several possible techniques that can be used to fabricate the thermal blanket 60. In FIG. 4, the backing layer 66, aerogel insulation material 62, optional layer 70 and composite layer 64 are stacked on appropriate tooling, shown in FIG. 4 as including a caul sheet 68, and then curing the resulting stacked structure 80 together in a process that defines the desired shape and size for the blanket 60. As shown in FIG. 4, the composite layer 64 can be wrapped around the entire perimeters of the insulation material 62 and backing layer 66, such that the insulation material 62 is completely encapsulated by the composite and backing layers 64 and 66. When placed on the caul sheet 68, the stacked structure 80 conforms to the surface of the caul sheet 68. Accordingly, to produce the arcuate shape of the blanket 60 represented in FIG. 3, the caul sheet 68 would also have a complementary arcuate shape (not shown). FIG. 4 schematically represents the stacked structure 80 as being covered with a bag 72 to enable a vacuum to be drawn between the caul sheet 68 and bag 72, such that the bag 72 compresses the stacked structure 80. A bag can be similarly used in an autoclave process, by which pressure is applied to the upper surface of the bag 72, such that the bag 72 compresses the stacked structure 80. In either case, the compression of the stacked structure 80 at an elevated temperature serves to compact and promote contact between the layers of the structure 80 during cure of the resin constituents of the composite layer 64 and backing layer 66. The curing process bonds at least the perimeters of the composite and backing layers 64 and 66 to each other so as to completely encapsulate the insulation material 62, as evident from FIG. 4. Optionally, the composite layer 64 and backing layer 66 may also be bonded directly to the opposite surfaces of the insulation material 62. An adhesive can be placed at the perimeter of one or both of the composite and backing layers 64 and 66 to promote their adhesion to each other. Release films 74 and 76 are represented as being between the stacked structure 80 and the caul sheet 68 and bag 72 to prevent adhesion of the composite and backing layers 64 and 66 to the caul sheet 68 and bag 72. The release films 74 and 76 can be formed of any suitable material, such as TEFLON®. The release sheet 76 is preferably porous to allow air surrounding the stacked structure 80 to be drawn from beneath the bag 72 and vented through a fitting 78. Prior to the process represented in FIG. 4, the composite layer 64 can be fabricated and cured separately using a vacuum or autoclave process, and then assembled with the insulation material 62 and backing layer 66 and bonded to the backing layer 66 with an adhesive.

Suitable curing temperatures, pressure/vacuum levels, and other parameters will depend in part on the particular materials used, and can be determined by routine experimentation. Using the example of the PYROGEL XT® aerogel material as the insulation material 62, SM8027 as a silica fabric-reinforced polysiloxane composite layer 64, and a carbon composite material as the backing layer 66, a suitable cure cycle can be conducted at a partial vacuum of about 5 to about 15 inches of Hg (about 17 to about 51 kPa). Once assembled as represented in FIG. 4, the stacked structure 80 can be heated from room temperature to about 50°C at a rate of about 2°C/minute and held for about forty minutes, then further heated to about 120°C at a rate of about 2°C/minute and held for about forty minutes, then further heated to about 180°C at a rate of about 2°C/minute and held for about two hours, and then further heated to about 200°C at a rate of about 2°C/minute and held for about two hours. Thereafter, the resulting laminated structure can be cooled to about 35°C at a rate of about 3°C/minute.

Thermal blankets constructed of the materials described above have been fabricated and evaluated through the use of testing commonly conducted to validate the performance of thermal blankets for nacelle applications. Included in such tests was a fire test and an evaluation of thermal conductivity. Testing was performed on two specimens fabricated and cured as described above, in which the insulation material 62 was a 0.5 cm thick layer of the PYROGEL XT® aerogel material, the composite layer 64 was a 0.05 mm thick layer of the SM8027 silica fabric-reinforced polysiloxane resin matrix material, and the backing layer 66 was a 0.05 mm thick layer of a carbon composite material formed with CYCOM® 997 as the resin matrix material and HEXTOW® AS4 as the carbon reinforcement material. The experimental thermal blankets had areal weights of about 0.4 lbs/ft² (about 2.0 kg/m²). For comparison, a conventional thermal blanket was also tested, in which the insulation material was a 0.5 cm thick layer of silica particles, metal oxides and reinforcement fibers between a 0.01 to 0.02 cm thick layer of stainless steel and a 0.05 cm thick layer of KAPTON® or silicone polymer layer. The conventional thermal blanket had areal weights of about 0.6 lbs/ft² (about 3.1 kg/m²). As such, the experimental blankets had areal weights that were about 35% less than the conventional thermal blanket. The total thickness of each tested thermal blanket was about 5 mm (about 0.2 inch).

Thermal conductivities were conducted at about 50 °C. The conventional thermal blanket had a thermal conductivity of about 0.054 W/mK, while the two experimental thermal blankets had thermal conductivities of about 0.052 and 0.048. W/mK. Accordingly, the experimental blankets had thermal conductivities that were roughly equivalent to or less than the conventional blanket.

Fire testing was conducted by subjecting the thermal blankets to a direct flame. The blankets were monitored over a span of about 1000 seconds, during which temperatures within a range of about 800°C to about 1000°C were sustained by the experimental thermal blankets, and temperatures within a range of about 700°C to about 900°C were sustained by the conventional thermal blanket. The performances of the experimental blankets were deemed to be equivalent to the conventional blanket.

From the above, it was concluded that a thermal blanket 60 fabricated in accordance with the present invention is capable of fire resistance equivalent to conventional thermal blankets, yet with areal weights of about 35% less than conventional thermal blankets. In addition, thermal blankets of this invention are capable of lower thermal conductivities that allow the thermal blanket 60 to be thinner to provide additional clearance with adjacent structural components of the core engine 14. As such, a notable aspect of the thermal blanket 60 represented in FIG. 3 is the ability to reduce the thickness required to achieve a desired level of thermal protection for the cowl 36. The thermal blanket 60 also exhibits good formability, and is believed to have a cost advantage over conventional thermal blankets.

Based on the results of the invention, a suitable total thickness for the thermal blanket 60 is believed to be at least 0.5 cm. In addition, thicknesses of not more than about 2.5 cm are preferred in view the limited space typically available to accommodate a thermal blanket within a typical core engine. A suitable thickness range is believed to be on the order of about 0.2 to about 3 cm, and more preferably about 0.5 cm to about 1 cm.

In combination, the composite layer 64 provides fire protection and the aerogel insulation material 62 provides thermal insulation to reduce the temperature of the cowl 36, for example, from about 3000°C to below 1250°C. The thickness of the aerogel insulation material 62 predominantly determines the temperature of the surfaces of the cowl 46 requiring protection. This capability is particularly advantageous if the thermal blanket 60 is installed to surround the combustor 24, high-pressure turbine 26 and low-pressure turbine 28 of the core engine 14 of FIG. 1, and serves as a protective thermal barrier for the core cowl 36.

While the invention has been described in terms of specific embodiments, it is apparent that other forms could be adopted by one skilled in the art. For example, the physical configuration of the thermal blanket 60 could differ from that shown in FIG. 3, and processes other than those noted could be used to fabricate the thermal blanket 60. Therefore, the scope of the invention is to be limited only by the following claims.

## Claims

1. A thermal insulation blanket (60) having a layered construction **characterized by**:
an aerogel insulation material (62) having oppositely-disposed first and second surfaces;
a composite layer (64) disposed at the first surface of the aerogel insulation material (62), the composite layer (64) comprising a resin matrix material reinforced with a fiber reinforcement material; and
a backing layer (66) disposed at the second surface of the aerogel insulation material (62) so that the aerogel insulation material (62) is encapsulated between the composite and backing layers (64,66).

2. The thermal insulation blanket (60) according to claim 1, wherein the aerogel insulation material (62) is formed of at least one material chosen from the group consisting of silica and alumina.

3. The thermal insulation blanket (60) according to claim 1 or 2, wherein the resin matrix material of the composite layer (64) is chosen from the group consisting of polysiloxane and geopolymers that convert to silica when heated.

4. The thermal insulation blanket (60) according to any one of claims 1 to 3, **characterized in that** the fiber reinforcement material of the composite layer (64) is at least one material chosen from the group consisting of silica, glass, quartz, alumina and silicon carbide fibers.

5. The thermal insulation blanket (60) according to any one of claims 1 to 4, wherein the backing layer (66) comprises at least one of a composite material, an aluminum foil, and a polymeric film.

6. The thermal insulation blanket (60) according to any one of claims 1 to 5, wherein the backing layer (66) comprises at least one polymeric film chosen from the group consisting of polyphenylsulfone films, polyimide films, and polyetherimide films.

7. The thermal insulation blanket (60) according to any one of claims 1 to 5, wherein the backing layer (66) comprises a glass composite material or a carbon composite material.

8. The thermal insulation blanket (60) according to claim 7, wherein the backing layer further comprises an aromatic-type epoxy amine resin matrix material.

9. The thermal insulation blanket (60) according to any one of claims 1 to 5, wherein the backing layer (66) comprises a carbon composite material containing a carbon reinforcement material.

10. The thermal insulation blanket (60) according to any one of claims 1 to 9, wherein the thermal insulation blanket (60) is installed in a core engine (14) of a high-bypass gas turbine engine (10).

11. The thermal insulation blanket (60) according to claim 10, wherein the thermal insulation blanket (60) is installed so as to thermally protect a cowl (36) that defines a boundary of a bypass duct (30) of the aircraft engine (10).

12. A process comprising:
stacking a composite layer (64), an aerogel insulation material (62), and a backing layer (66) on a tooling to form a stacked structure (80), the composite layer (64) comprising a resin matrix material reinforced with a fiber reinforcement material;
heating the stacked structure (80) to bond the composite and backing layers (64,66) to each other so that a thermal insulation blanket (60) is formed in which the aerogel insulation material (62) is encapsulated between the composite and backing layers (64,66); and
installing the thermal insulation blanket (60) on an aircraft engine (10) so that the thermal insulation blanket (60) thermally protects a cowl (36) that defines a boundary of a bypass duct (30) of the aircraft engine (10).

13. The process according to claim 12, wherein the aerogel insulation material (62) is formed of a material chosen from the group consisting of silica and alumina.

14. The process according to either of claim 12 or 13, wherein the resin matrix material of the composite layer (64) is chosen from the group consisting polysiloxane and geopolymers that convert to silica when heated, and the fiber reinforcement material of the composite layer (64) is at least one material chosen from the group consisting of silica, glass, quartz, alumina and silicon carbide fibers.

15. The process according to any of claims 12 to 14, wherein the backing layer (66) comprises at least one of a composite material, an aluminum foil, and a polymeric film.
